(19) Europäisches Patentamt
European Patent Office
Office européen des brevets

(11) **EP 4 302 916 A1**

(12) **EUROPEAN PATENT APPLICATION**
published in accordance with Art. 153(4) EPC

(43) Date of publication:
**10.01.2024 Bulletin 2024/02**

(21) Application number: **22787896.4**

(22) Date of filing: **07.03.2022**

(51) International Patent Classification (IPC):
**B23K 11/11** (2006.01)    **B23K 11/24** (2006.01)

(52) Cooperative Patent Classification (CPC):
**B23K 11/11; B23K 11/24**

(86) International application number:
**PCT/JP2022/009682**

(87) International publication number:
**WO 2022/219968 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2021 JP 2021066924**

(71) Applicant: **JFE Steel Corporation**
**Tokyo 100-0011 (JP)**

(72) Inventors:
• **KAWABE Nao**
**Tokyo 100-0011 (JP)**

• **SAWANISHI Chikaumi**
**Tokyo 100-0011 (JP)**
• **TAKASHIMA Katsutoshi**
**Tokyo 100-0011 (JP)**
• **TANIGUCHI Koichi**
**Tokyo 100-0011 (JP)**
• **MATSUDA Hiroshi**
**Tokyo 100-0011 (JP)**
• **YAMAGISHI Daiki**
**Tokyo 100-0011 (JP)**

(74) Representative: **Haseltine Lake Kempner LLP**
**Bürkleinstrasse 10**
**80538 München (DE)**

(54) **RESISTANCE SPOT WELDING METHOD**

(57)    Provided is a resistance spot welding method. The present invention is directed to a resistance spot welding method for joining two or more steel sheets including at least one zinc-coated steel sheet. Current application includes a first current applying step and a second current applying step. The first current applying step involves forming a nugget having a nugget diameter of 3Vt or more and 4.5Vt or less by setting a current value I1 (kA) and a weld time, where t is a thickness of the thinnest steel sheet among the overlapping steel sheets. The second current applying step involves growing the nugget by repeating a cooling step for maintaining a zero-current state for 10 ms or more and less than 160 ms and a current applying step for applying a current for 20 ms or more and less than 200 ms at a current value I2 (kA) greater than or equal to the current value I1 (kA).

FIG. 1

**Description**

Technical Field

The present invention relates to a resistance spot welding method.

Background Art

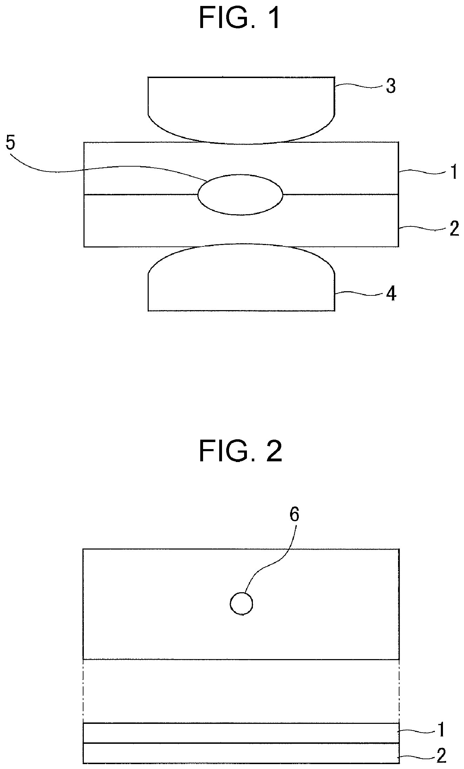

In general, resistance spot welding, a type of lap resistance welding, is used to join two or more overlapping steel sheets together. Referring to Fig. 1, this welding method is a method for joining steel sheets together by passing a welding current between a pair of upper and lower electrodes 3 and 4 while the pair of electrodes 3 and 4 holds a sheet combination of two overlapping steel sheets 1 and 2 from upper side and lower side and presses the sheet combination from upper and lower. The resistance heat generated by the passage of the welding current is used to form a spot-like weld 5. The spot-like weld 5, which is called a nugget, is a portion in which the overlapping steel sheets 1 and 2 melt and solidify at a contact point between the steel sheets 1 and 2 upon the passage of the welding current through the steel sheets. The steel sheets are joined together at the spot-like weld 5. Fig. 1 illustrates an example of two overlapping steel sheets.

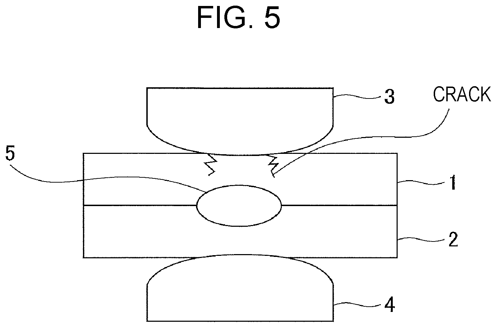

However, resistance spot welding of a sheet combination of two or more overlapping steel sheets including a surface-treated steel sheet has a problem of possible cracking in a weld (see Fig. 5). As used herein, the surface-treated steel sheet refers to a steel sheet having, on the surface of the base material (base steel sheet), a metal coating layer, such as a zinc coating represented by an electrogalvanized coating, a hot-dip galvanized coating (including a hot-dip galvannealed coating), or a zinc alloy coating containing an element, such as aluminum or magnesium, in addition to zinc. Since the zinc coating or zinc alloy coating has a lower melting point than the base material, the weld tends to crack.

The cracking of the weld may be due to liquid metal embrittlement, which causes cracking when the metal coating layer with a low melting point on the surface of the steel sheet melts during welding, and the molten metal with a low melting point penetrates the grain boundaries of the base material of the surface-treated steel sheet to lower the grain boundary strength upon application of the welding force from the electrodes or the tensile stress from the thermal expansion and contraction of the steel sheets to the weld.

Such cracking tends to occur when the weld undergoes large deformation. For example, welding under the conditions where splash occurs tends to cause cracking in the surfaces of the steel sheets 1 and 2 in contact with the electrodes 3 and 4 as illustrated in Fig. 5. To ensure joint strength, it is important to form a nugget with a large nugget diameter. In actual operation, a sufficient current density cannot be ensured in a weld zone in some cases because of the shunt current flowing to welding points near the weld zone or the effect of operational disturbance, such as electrode wear caused by continuous spot welding, during welding. In such cases, the heat input is reduced, and it is thus difficult to ensure a predetermined nugget diameter. A nugget with a large diameter can be ensured by setting a large current value during welding in consideration of cases where the heat input is reduced as described above. In this case, however, the weld undergoes large deformation as represented by occurrence of splash to increase the risk of cracking. As described above, it is difficult to stably form a nugget with a large diameter while suppressing weld cracking in actual operation. This is an issue for practical use of surface-treated steel sheets.

To solve such an issue, there are techniques described in, for example, Patent Literature 1 to 3. Patent Literature 1 discloses a method for spot welding of high strength-coated steel sheets, wherein cracking is suppressed by appropriately adjusting the weld time and the holding time after application of welding current.

In Patent Literature 2, the current pattern has three or more stages of current application, and the welding conditions, such as the weld time and the welding current, are adjusted such that a suitable current range (current range in which a nugget with a desired nugget diameter or more and a molten residual thickness of 0.05 mm or more can be stably formed) is 1.0 kA or more, preferably 2.0 kA or more, and the cooling time is provided between the stages. Accordingly, cracking is suppressed in the method disclosed in Patent Literature 2.

Patent Literature 3 discloses a method for suppressing cracking by appropriately adjusting the holding time after current application.

Citation List

Patent Literature

Patent Literature 1: Japanese Unexamined Patent Application Publication No. 2003-103377
Patent Literature 2: Japanese Unexamined Patent Application Publication No. 2003-236676

Patent Literature 3: Japanese Unexamined Patent Application Publication No. 2017-47476

Summary of Invention

Technical Problem

However, Patent Literature 1 and Patent Literature 2 do not examine the effect of operational disturbance and may take insufficient measures in consideration of actual operation during automotive assembly. Patent Literature 3 is a technique capable of suppressing cracking that occurs during the time from the end of current application to the opening of the electrodes. There is no mention on cracking during current application, and it may be difficult to suppress such cracking.

The problem of difficulty in stably forming a nugget with a large diameter while suppressing weld cracking of surface-treated steel sheets occurs not only in resistance spot welding of automotive steel sheets but also in resistance spot welding of other steel sheets.

The present invention has been made in light of the above circumstances. An object of the present invention is to provide a resistance spot welding method in which a nugget with a large diameter can be stably formed while weld cracking of surface-treated steel sheets is suppressed. Solution to Problem

The inventors of the present invention have carried out intensive studies to achieve the above object.

Weld cracking tends to occur when the weld undergoes large deformation. The inventors of the present invention reveal that a nugget with a large diameter can be stably formed with cracking suppressed as long as the nugget can be grown with minimized deformation.

The current applying step during welding is divided into two steps: a first current applying step, and a second current applying step. In the first current applying step, a nugget with a certain diameter is formed by applying a current without significant deformation. In this step, a nugget of a certain size or larger is not formed since the current value and the weld time are adjusted to prevent or reduce deformation. However, there may be a problem that a nugget with a predetermined nugget diameter cannot be formed in the presence of, for example, disturbance that reduces the nugget diameter. To solve the problem, the nugget is grown by adjusting the current application conditions so as not to cause large deformation in the weld in the second current applying step. This process can stably form a nugget with a large diameter while suppressing weld cracking.

The current application conditions in the second current applying step are described below. In the second current applying step, the nugget can be grown by current application at a current value I2 (kA) greater than or equal to the current value I1 (kA) in the first current applying step. However, long-time current application results in excess heat input to cause large deformation in the weld. The current application in a current pattern in which short-time current application and short-time cooling are repeated enables stepwise nugget growth while preventing or reducing deformation of the weld, which makes it possible to suppress weld cracking. In this current pattern, the shot-time current application can reduce the degree of splash (the amount of molten metal spread in splash) even if splash occurs. This reduces the deformation of the weld and as a result, can suppress weld cracking.

The present invention has been accomplished on the basis of the above finding. The gist of the present invention is as follows.

[1] A resistance spot welding method including:

applying a current to a sheet combination of two or more overlapping steel sheets including at least one zinc-coated steel sheet with the sheet combination held and pressed by a pair of welding electrodes to join the steel sheets together,
wherein the current application includes a first current applying step and a second current applying step,
the first current applying step involves forming a nugget having a nugget diameter of 3√t or more and 4.5√t or less by setting a current value I1 (kA) and a weld time, where t is a thickness of the thinnest steel sheet among the overlapping steel sheets, and
the second current applying step involves growing the nugget by repeating a cooling step for maintaining a zero-current state for 10 ms or more and less than 160 ms and a current applying step for applying a current for 20 ms or more and less than 200 ms at a current value I2 (kA) greater than or equal to the current value I1 (kA).

[2] The resistance spot welding method according to [1], wherein the number of repetitions of the cooling step and the current applying step in the second current applying step is 2 or more and 10 or less.

[3] The resistance spot welding method according to [1] or [2], wherein an amount of increase in nugget diameter in the second current applying step represented by (N2 - N1) is 0.1√t or more,
where N1 represents a nugget diameter (mm) formed after completion of the first current applying step, and N2 represents a nugget diameter (mm) formed after completion of the first current applying step and the second current applying step.

[4] The resistance spot welding method according to any one of [1] to [3], wherein the zinc-coated steel sheet is a high strength steel sheet having a Ceq, which is represented by formula (1), of 0.20% or more and a tensile strength of 780 MPa or more,

$$\text{Ceq (\%)} = \text{C} + \text{Si}/30 + \text{Mn}/20 + 2\text{P} + 4\text{S} \quad (1)$$

in formula (1), each element symbol represents an amount (mass%) of the corresponding element.

Advantageous Effects of Invention

The present invention has superior advantageous effects since the present invention makes it possible to stably form a nugget with a large diameter while suppressing weld cracking of surface-treated steel sheets.

Brief Description of Drawings

[Fig. 1] Fig. 1 is a schematic cross-sectional view of an example of resistance spot welding of the present invention.

[Fig. 2] Fig. 2 is a view of a test specimen of resistance spot welding in Examples of the present invention, where the upper panel is a plan view, and the lower panel is a side view.

[Fig. 3] Fig. 3 is a view of a test specimen of resistance spot welding in Examples of the present invention, where the upper panel is a plan view, and the lower panel is a side view.

[Fig. 4] Fig. 4 is a view of a test specimen of resistance spot welding in Examples of the present invention, where the upper panel is a plan view, and the lower panel is a side view.

[Fig. 5] Fig. 5 is a schematic cross-sectional view of an example of resistance spot welding in the related art.

Description of Embodiments

A resistance spot welding method of the present invention will be described below with reference to the drawings. The present invention is not limited to the embodiments.

The present invention provides a resistance spot welding method including applying a current to a sheet combination of two or more overlapping steel sheets in a current pattern described below with the sheet combination held and pressed by a pair of welding electrodes disposed vertically to the sheet combination to form a nugget and join the steel sheets together.

For example, resistance spot welding of a sheet combination of two overlapping steel sheets as illustrated in Fig. 1 involves applying a current to the overlapping steel sheets (a lower steel sheet 2 and an upper steel sheet 1) with the overlapping steel sheets held and pressed by a pair of welding electrodes: a welding electrode 4 (hereinafter may be referred to as a lower electrode) disposed on the lower side of the sheet combination, and a welding electrode 3 (hereinafter may be referred to as an upper electrode) disposed on the upper side of the sheet combination.

A device used in the resistance spot welding method of the present invention preferably, but not necessarily, has a structure in which the lower electrode and the upper electrode apply force, wherein the welding force is controlled. For example, devices such as air cylinders and servo motors can be used. A unit for controlling the current value is not limited, and the present invention can be applied to both direct current and alternating current. For alternating current, the "current" means "effective current."

The lower electrode and the upper electrode may have any tip shape. Examples of the tip shape include DR type (dome radius type), R type (radius type), and D type (dome type) described in JISC 9304: 1999. The tip diameter of each electrode is, for example, 4 mm to 16 mm. The curvature radius is, for example, 10 mm to 400 mm. Flat tip electrodes may be used.

As described above, the current is applied to the overlapping steel sheets 1 and 2 (sheet combination) with the sheet combination held and pressed by a pair of welding electrodes 3 and 4 to form a nugget 5 having a desired size with resistance heat and join the overlapping steel sheets together, whereby a welding joint is obtained.

The present invention is applied to resistance spot welding of a sheet combination including a surface-treated steel sheet with a metal coating layer in one or both of the surfaces of the sheet combination in contact with the welding electrodes disposed on the upper side of and on the lower side of the sheet combination. The expression "both of the surfaces of the sheet combination in contact with the welding electrodes" refers to two outermost steel sheets in a sheet combination composed of two or more steel sheets, the two outermost steel sheets being in contact with the upper electrode and the lower electrode. The expression "one of the surfaces of the sheet combination in contact with the welding electrodes" refers to one of two outermost steel sheets in a sheet combination composed of two or more steel sheets, the one of two outermost steel sheets being in contact with the upper electrode and the lower electrode. The melting point of the metal coating layer is preferably lower than the melting point of the base material of the surface-treated steel sheet.

As described above, the surface-treated steel sheet refers to a steel sheet having, on the surface of the base material (base steel sheet), a metal coating layer, such as a zinc coating represented by an electrogalvanized coating, a hot-dip galvanized coating (including a hot-dip galvannealed coating), or a zinc alloy coating containing an element, such as aluminum or magnesium, in addition to zinc. Such a surface-treated steel sheet is referred to as a "zinc-coated steel sheet." Therefore, at least one of two or more steel sheets in the sheet combination is a zinc-coated steel sheet in the present invention.

The zinc-coated steel sheet is preferably a high strength steel sheet having an equivalent carbon content (Ceq) (%), which is represented by formula (1) below, of 0.20% or more and a tensile strength of 780 MPa or more.

$$Ceq\ (\%) = C + Si/30 + Mn/20 + 2P + 4S \quad (1)$$

in formula (1), each element symbol represents the amount (mass%) of the corresponding element.

Since high strength steel sheets have high sensitivity to cracking and have high possibility of weld cracking, the use of the high strength steel sheet described above further exerts the advantageous effects of the present invention. Steel sheets having an equivalent carbon content of less than 0.20% or a tensile strength of less than 780 MPa have low sensitivity to cracking and actually have low possibility of weld cracking. The equivalent carbon content (Ceq) is preferably 0.30% or more. The upper limit of the equivalent carbon content (Ceq) is not defined. Steel sheets having an excessively high equivalent carbon content, or excessively high sensitivity to cracking, may not have a sufficient cracking suppressing effect even if the current pattern of the present invention is used. Therefore, the equivalent carbon content Ceq is preferably 0.60% or less, more preferably 0.50% or less.

In the present invention, the thickness of steel sheets to be joined by resistance spot welding is not limited. The steel sheets preferably have a thickness in the range of 0.5 mm or more and 3.0 mm or less. The steel sheets having a thickness in this range can be suitably used as automotive members.

Two or more steel sheets to be joined by resistance spot welding may be of the same type or the same shape, or may be of different types or different shapes. A surface-treated steel sheet with a metal coating layer may overlap a steel sheet without a metal coating layer.

Next, the current pattern in the resistance spot welding method of the present invention will be described.

In the present invention, the current is applied to a sheet combination of two or more overlapping steel sheets including at least one zinc-coated steel sheet with the sheet combination held and pressed by a pair of welding electrodes to form a nugget and join the steel sheets together. The current application has a first current applying step and a second current applying step. In the present invention, the current is applied in a specific pattern described below.

First, the first current applying step involves forming a nugget with a nugget diameter of 3Vt or more and 4.5Vt or less by setting at least the current value I1 (kA) and the weld time, where t is the thickness of the thinnest steel sheet among the overlapping steel sheets. In this step, the nugget is formed without splash.

If the formed nugget diameter is less than 3Vt, the nugget diameter formed in the first current applying step is too small, and it is difficult to sufficiently grow the nugget in the subsequent second current applying step. As a result, it is difficult to ensure a large nugget diameter. If the formed nugget diameter is more than 4.5√t, the heat input from current application is so high that the weld deforms, and cracking easily occurs. Therefore, the nugget diameter formed in the first current applying step is 3Vt or more and 4.5Vt or less.

The nugget diameter formed in the first current applying step is preferably in the range of 4Vt to 4.5Vt. With the nugget diameter in the range of 4Vt to 4.5Vt, it is possible to more noticeably obtain a nugget diameter increasing effect in the subsequent second current applying step.

The "t" represents the thickness of a steel sheet. Specifically, the "t" is the thickness of the thinnest steel sheet among the overlapping steel sheets in the sheet combination. For example, when two or more steel sheets in the sheet combination have different thicknesses, the "t" is the thickness of the thinnest steel sheet among the steel sheets.

The current value, the weld time, and the welding force in the first current applying step can be appropriately selected from conditions under which the above nugget diameter can be ensured. To form a nugget with the above nugget diameter without splash, the resistance spot welding conditions in the first current applying step are preferably as follows: current value I1 in the range of 4 to 10 kA, weld time in the range of 100 to 500 ms, and welding force in the range of 1.5 kN to 8.0 kN in the present invention. The current value I1 and the weld time in the first current applying step for forming the above nugget diameter (3Vt or more and 4.5Vt or less) may vary depending on the steel grade of the steel sheets used in the sheet combination. As long as the above nugget diameter required for application of the present invention is ensured, the current value I1 and the weld time in the first current applying step may be less or more than the above ranges.

If only the second current applying step is carried out without the first current applying step, short-time repeated current application is performed in the second current applying step without obtaining an effect of forming the initial nugget in the first current applying step. It is thus difficult to obtain an effect of stably ensuring a large nugget diameter.

After the first current applying step, the second current applying step is carried out. In the second current applying step, the nugget is grown by repeating the cooling step for maintaining a zero-current state for 10 ms or more and less than 160 ms and the current applying step for applying a current for 20 ms or more and less than 200 ms at a current value I2 (kA) greater than or equal to the current value I1 (kA) in the first current applying step. The number of repetitions of the cooling step and the current applying step is 1 or more.

In the present invention, the nugget diameter in the weld obtained after the second current applying step is preferably a target diameter in the range of 4.5Vt to 6Vt to ensure a sufficient joint strength.

If the pause time in the cooling step is less than 10 ms, the weld cannot receive a sufficient cooling effect, and the weld tends to undergo large deformation in the subsequent current applying step. As a result, the weld easily cracks. If the pause time in the cooling step is 160 ms or more, the effect of nugget shrinkage during cooling is too large to obtain a sufficient nugget growing effect through current application including repetition of the cooling step and the current applying step. Therefore, the pause time in the cooling step is 10 ms or more and less than 160 ms. The pause time in the cooling step is preferably 150 ms or less, more preferably 100 ms or less.

If the weld time in the current applying step is less than 20 ms, the nugget growing effect is not sufficiently obtained due to low heat input. If the weld time in the current applying step is 200 ms or more, the weld tends to undergo large deformation due to excess heat input per current application, and the weld tends to crack. Therefore, the weld time in the current applying step is 20 ms or more and less than 200 ms. The weld time in the current applying step is preferably 180 ms or less, more preferably 150 ms or less.

To more noticeably obtain a nugget diameter increasing effect while preventing or reducing deformation of the weld, the pause time in the cooling step is preferably 10 to 80 ms, and the weld time in the current applying step is preferably 20 to 100 ms. The weld time in the current applying step is more preferably 40 ms or more.

If the current value I2 (kA) in the current applying step is less than the current value I1 (kA) in the first current applying step, the nugget growing effect is not obtained due to low heat input. Therefore, the current value I2 (kA) in the current applying step is more than or equal to the current value I1 (kA) in the first current applying step. The upper limit of the current value I2 in the current applying step is not defined. If the current is too high, the weld undergoes large deformation due to excess heat input and may crack. Therefore, the current value I2 (kA) is preferably (3 × I1) (kA) or less. The current value I2 (kA) is more preferably (2 × I1) (kA) or less.

The welding force in the second current applying step can be appropriately selected from conditions under which the above operational effect can be ensured. The welding force in the second current applying step is preferably in the range of 1.5 kN to 8.0 kN.

In the present invention, the number of repetitions of the cooling step and the current applying step in the second current applying step is preferably 2 or more and 10 or less. If the number of repetitions is less than 2, the nugget diameter increasing effect may not be sufficiently obtained. If the number of repetitions is more than 10, it is difficult to obtain the noticeable effect due to the saturation of the nugget growing effect. In this case, the total time of the entire welding step is long. In view of operational efficiency, the number of repetitions is preferably 10 or less. The number of repetitions is more preferably 5 or less.

To form a nugget with a large diameter in the present invention, the value of (N2 - N1), which is the amount of increase in nugget diameter in the second current applying step, is preferably 0.1√t or more, where N1 represents a nugget diameter (mm) formed after completion of the first current applying step, and N2 represents a nugget diameter (mm) formed after completion of the first current applying step and the second current applying step. The value of (N2 - N1) is more preferably 0.3Vt or more, still more preferably 0.5Vt or more. If the nugget diameter in the second current applying step is too large, the weld undergoes large deformation due to excess heat input and may crack. Therefore, the amount of increase is preferably 3.0√t or less. The value of (N2 - N1) is more preferably 2.5Vt or less, still more preferably 2.0√t or less.

The above description mainly focuses on resistance spot welding of two overlapping steel sheets. However, the present invention can also be applied to welding of three or more overlapping steel sheets, and the same advantageous effects can be obtained.

EXAMPLES

The operations and effects of the present invention will be described below by using Examples. The present invention is not limited to Examples below.

In Examples, two overlapping steel sheets including at least one zinc-coated steel sheet were used, and the steel sheets were placed on top of each other to form a sheet combination. In this case, hot-dip galvannealed (GA) steel sheets having the equivalent carbon content (Ceq) represented by formula (1) above, the tensile strength, and the thickness shown in Table 1-1 were used as an upper steel sheet and a lower steel sheet. In addition, steel sheets (cold rolled steel sheets) shown in Table 1-1 were used to form a sheet combination. The sheet combination was subjected to resistance spot welding under the conditions shown in Table 1-2 to form welding joints. The welding force in the first current applying step and the second current applying step was appropriately set in the range of 1.5 kN to 8.0 kN to form a nugget with the nugget diameter described in Table.

Resistance spot welding was carried out at room temperature with the welding electrodes (lower electrode and upper electrode) always cooled with water. The lower electrode and the upper electrode were both DR-type electrodes made of chromium copper and having a tip with a diameter (tip diameter) of 6 mm and a curvature radius of 40 mm. The welding force was controlled by driving the upper electrode with a servo motor, and a direct current was supplied during current application.

Welding joints were prepared under three disturbance conditions, "without disturbance," "with sheet gap," and "with already welded points," for each welding condition, and the nugget diameters (N1, N2), the amount of increase in nugget diameter (N2 - N1) in the second current applying step, and the presence of cracking (LME cracking) were observed by using each of the prepared welding joints.

The preparation of the welding joints under the above three disturbance conditions will be described with reference to Fig. 2 to Fig. 4. Each figure illustrates a test sample of overlapping steel sheets in resistance spot welding. The upper part is a plan view of the test sample, and the lower part is a side view of the test sample.

A welding joint "without disturbance" in the disturbance conditions was prepared as described below. Referring to Fig. 2, two steel sheets (upper steel sheet 1, lower steel sheet 2) with a size of 30 mm × 100 mm (shorter side × longer side) were prepared from the above steel sheets (GA, cold rolled steel sheets). The steel sheets were placed on top of each other to form a test sample, and a weld 6 at the center of the test sample was welded under the conditions shown in Table 1-2 to prepare a welding joint. The nugget diameter, the amount of increase, and the presence of cracking were observed by using the weld 6 of the prepared welding joint.

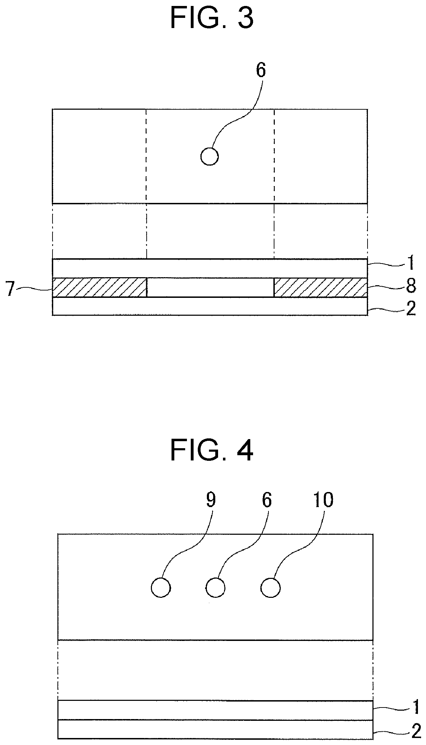

A welding joint "with sheet gap" in the disturbance conditions was prepared as described below. Referring to Fig. 3, two steel sheets (upper steel sheet 1, lower steel sheet 2) with a size of 30 mm × 100 mm (shorter side × longer side) were prepared from the above steel sheets (GA, cold rolled steel sheets). Spacers 7 and 8 having a thickness of 1.6 mm and a size of 30 mm × 25 mm (shorter side × longer side) were sandwiched between the two steel sheets and at both of the end portions of the steel sheets to form a test sample. A weld 6 at the center of the test sample was welded under the conditions shown in Table 1-2 to prepare a welding joint. The nugget diameter, the amount of increase, and the presence of cracking were observed by using the weld 6 of the prepared welding joint.

A test sample "with already welded points" in the disturbance conditions was prepared as described below. Referring to Fig. 4, two steel sheets (upper steel sheet 1, lower steel sheet 2) with a size of 30 mm × 100 mm (shorter side × longer side) were prepared from the above steel sheets (GA, cold rolled steel sheets) and placed on top of each other to form a test sample. Already welded points 9 and 10 having a nugget diameter of 5 mm were positioned 20 mm away from the center of the test sample in the longitudinal direction, and a weld 6 at the center of the test sample was welded under the conditions shown in Table 1-2 to prepare a welding joint. The nugget diameter, the amount of increase, and the presence of cracking were observed by using the weld 6 of the prepared welding joint.

The evaluation of the nugget diameter, the amount of increase, and the presence of cracking, and the judgement were carried out as described below.

[Evaluation of Nugget Diameter and Amount of Increase Described Above]

The nugget diameter (N1) after the first current applying step was obtained by performing in advance a welding test including only the first current applying step under each disturbance condition and observing the cross section. In this case, the nugget diameter between the steel sheets was measured by observing the cross section of the weld with an optical microscope after etching. The obtained measured values are shown in the column titled "nugget diameter after first current applying step N1" in Table 2.

The nugget diameter (N2) after the second current applying step was measured by the same method as described above using each welding joint prepared by performing the welding test under the three disturbance conditions. The obtained measured values are shown in the column titled "nugget diameter after second current applying step N2" in Table 2.

The values calculated from (N2 - N1) indicating the amount of increase in nugget diameter in the second current applying step are shown in the column titled "N2 - N1" in Table 2.

[Evaluation of Cracking]

Cracking (LME Cracking) was evaluated by using each welding joint prepared by performing the welding test under the three disturbance conditions. As a result of observation of the cross section of the weld with an optical microscope, welding joints were evaluated as "with cracking, or 'present' in Table 2" when a crack of 200 um or more was observed in the weld surface. When a crack of 200 um or more was not observed, welding joints were evaluated as "without cracking, or 'absent' in Table 2." The results are shown in Table 2.

[Judgement]

With regard to judgement, welding joints with a nugget diameter (N2) of 4.5Vt or more and without cracking under all of the three disturbance conditions were rated "A (acceptable)." Otherwise, welding joints were rated "B (unacceptable)". The results are shown in Table 2.

[Table 1-1]

| Sheet Combination | Upper Steel Sheet | | | | Lower Steel Sheet | | | |
|---|---|---|---|---|---|---|---|---|
| | tensile strength (MPa) | steel sheet | equivalent carbon content Ceq (%) | thickness (mm) | tensile strength (MPa) | steel sheet | equivalent carbon content Ceq (%) | thickness (mm) |
| A | 1470 | GA | 0.40 | 1.4 | 1470 | GA | 0.40 | 1.4 |
| B | 780 | GA | 0.30 | 1.4 | 1180 | cold rolled steel sheet | 0.35 | 1.6 |
| C | 1800 | GA | 0.50 | 1.2 | 780 | GA | 0.22 | 1.8 |
| D | 2000 | GA | 0.60 | 1.0 | 1180 | cold rolled steel sheet | 0.35 | 2.8 |
| E | 270 | GA | 0.11 | 0.6 | 1180 | GA | 0.37 | 1.2 |
| F | 780 | GA | 0.25 | 0.7 | 1470 | GA | 0.40 | 1.6 |

[Table 1-2]

| Test No. | Welding Force (kN) | Sheet Combination | First Current Applying Step | | Second Current Applying Step | | | |
|---|---|---|---|---|---|---|---|---|
| | | | current value 11 (kA) | weld time (ms) | cooling step | current applying step | | number of repetitions (times) |
| | | | | | cooling time (ms) | current value 12 (kA) | weld time (ms) | |
| 1 | 4.0 | A | 6.5 | 150 | 20 | 9.0 | 40 | 3 |
| 2 | 4.0 | A | 5.0 | 200 | 20 | 9.0 | 40 | 3 |
| 3 | 4.0 | A | 6.5 | 150 | 20 | 9.0 | 40 | 5 |
| 4 | 4.0 | A | 6.5 | 200 | 40 | 8.5 | 80 | 3 |
| 5 | 4.0 | A | 8.0 | 200 | - | - | - | - |
| 6 | 4.0 | A | 7.0 | 200 | - | - | - | - |
| 7 | 4.0 | A | - | - | 20 | 9.0 | 60 | 5 |

(continued)

| Test No. | Welding Force (kN) | Sheet Combination | First Current Applying Step | | Second Current Applying Step | | | | |
|---|---|---|---|---|---|---|---|---|---|
| | | | current value 11 (kA) | weld time (ms) | cooling step | current applying step | | | number of repetitions (times) |
| | | | | | cooling time (ms) | current value 12 (kA) | weld time (ms) | | |
| 8 | 4.0 | A | - | - | 20 | 8.0 | 60 | | 5 |
| 9 | 4.0 | A | 3.0 | 150 | 20 | 9.0 | 40 | | 3 |
| 10 | 4.0 | A | 8.0 | 200 | 20 | 9.0 | 40 | | 3 |
| 11 | 4.0 | A | 6.5 | 200 | 20 | 5.0 | 60 | | 5 |
| 12 | 2.5 | B | 7.2 | 200 | 20 | 9.5 | 40 | | 4 |
| 13 | 2.5 | B | 7.2 | 200 | 180 | 9.5 | 60 | | 3 |
| 14 | 2.5 | B | 7.0 | 200 | 140 | 9.0 | 180 | | 1 |
| 15 | 2.5 | B | 7.2 | 200 | 60 | 8.0 | 220 | | 2 |
| 16 | 5.0 | C | 7.0 | 200 | 60 | 9.0 | 100 | | 2 |
| 17 | 6.0 | C | 8.0 | 150 | 40 | 9.5 | 60 | | 3 |
| 18 | 5.0 | C | 8.0 | 200 | 40 | 10.0 | 60 | | 3 |
| 19 | 6.0 | D | 6.0 | 200 | 20 | 9.5 | 40 | | 4 |
| 20 | 6.0 | D | 6.5 | 200 | 20 | 9.5 | 40 | | 4 |
| 21 | 3.0 | E | 6.3 | 200 | 100 | 8.5 | 120 | | 2 |
| 22 | 3.0 | E | 6.3 | 200 | 80 | 9.0 | 120 | | 2 |
| 23 | 3.0 | E | 6.3 | 200 | 20 | 9.0 | 40 | | 9 |
| 24 | 3.0 | E | 6.3 | 200 | 40 | 9.5 | 80 | | 4 |
| 25 | 3.5 | F | 5.8 | 200 | 40 | 9.0 | 80 | | 4 |

[Table 2]

| Test No. | Without Disturbance | | | | With Sheet Gap | | | | With Already Welded Points | | | | Judgement | Note |
|---|---|---|---|---|---|---|---|---|---|---|---|---|---|---|
| | nugget diameter after first current applying step N1 (times $\sqrt{t}$) | nugget diameter after second current applying step N2 (times $\sqrt{t}$) | LME cracking | N2-N1 (times $\sqrt{t}$) | nugget diameter after first current applying step N1 (times $\sqrt{t}$) | nugget diameter after second current applying step N2 (times $\sqrt{t}$) | LME cracking | N2-N1 (times $\sqrt{t}$) | nugget diameter after first current applying step N1 (times $\sqrt{t}$) | nugget diameter after second current applying step N2 (times $\sqrt{t}$) | LME cracking | N2-N1 (times $\sqrt{t}$) | | |
| 1 | 4.3 | 5.0 | absent | 0.7 | 4.4 | 5.1 | absent | 0.7 | 4.1 | 4.8 | absent | 0.7 | A | Invention Example |
| 2 | 3.3 | 4.8 | absent | 1.5 | 3.4 | 5.0 | absent | 1.6 | 3.0 | 4.7 | absent | 1.7 | A | Invention Example |
| 3 | 4.3 | 5.1 | absent | 0.8 | 4.4 | 5.1 | absent | 0.7 | 4.1 | 5.0 | absent | 0.9 | A | Invention Example |
| 4 | 4.3 | 5.0 | absent | 0.7 | 4.4 | 5.2 | absent | 0.8 | 4.2 | 4.8 | absent | 0.6 | A | Invention Example |
| 5 | 5.0 | - | absent | - | 5.2 | - | present | - | 4.8 | - | absent | - | B | Comparative Example |
| 6 | 4.6 | - | absent | - | 4.8 | - | absent | - | 4.2 ↓ | - | absent | - | B | Comparative Example |
| 7 | - | 4.7 | absent | - | - | 4.8 | absent | - | - | 4.2 ↓ | absent | - | B | Comparative Example |
| 8 | - | 4.2 ↓ | absent | - | - | 4.6 | absent | - | - | 3.9 ↓ | absent | - | B | Comparative Example |
| 9 | 2.0 | 4.3 ↓ | absent | 2.3 | 2.2 | 4.5 | absent | 2.3 | 1.2 | 4.0 ↓ | absent | 2.8 | B | Comparative Example |
| 10 | 5.0 | 5.2 | absent | 0.2 | 5.2 | 5.2 | present | 0.0 | 4.8 | 5.0 | absent | 0.2 | B | Comparative Example |
| 11 | 4.3 | 4.3 ↓ | absent | 0.0 | 4.5 | 4.5 | absent | 0.0 | 4.0 | 4.0 ↓ | absent | 0.0 | B | Comparative Example |
| 12 | 4.3 | 5.0 | absent | 0.7 | 4.5 | 5.2 | absent | 0.7 | 4.1 | 4.9 | absent | 0.8 | A | Invention Example |

(continued)

| Test No. | Without Disturbance | | | | With Sheet Gap | | | | With Already Welded Points | | | | Judgement | Note |
|---|---|---|---|---|---|---|---|---|---|---|---|---|---|---|
| | nugget diameter after first current applying step N1 (times √t) | nugget diameter after second current applying step N2 (times √t) | LME cracking | N2-N1 (times √t) | nugget diameter after first current applying step N1 (times √t) | nugget diameter after second current applying step N2 (times √t) | LME cracking | N2-N1 (times √t) | nugget diameter after first current applying step N1 (times √t) | nugget diameter after second current applying step N2 (times √t) | LME cracking | N2-N1 (times √t) | | |
| 13 | 4.3 | 4.3 ↓ | absent | 0.0 | 4.5 | 4.5 | absent | 0.0 | 4.1 | 4.1 ↓ | absent | 0.0 | B | Comparative Example |
| 14 | 4.2 | 4.8 | absent | 0.6 | 4.4 | 5.0 | absent | 0.6 | 4.0 | 4.6 | absent | 0.6 | A | Invention Example |
| 15 | 4.3 | 5.0 | absent | 0.7 | 4.5 | 5.2 | present | 0.7 | 4.1 | 4.9 | absent | 0.8 | B | Comparative Example |
| 16 | 4.3 | 4.9 | absent | 0.6 | 4.5 | 5.1 | absent | 0.6 | 4.0 | 4.8 | absent | 0.8 | A | Invention Example |
| 17 | 4.2 | 4.9 | absent | 0.7 | 4.4 | 5.0 | absent | 0.6 | 4.0 | 4.7 | absent | 0.7 | A | Invention Example |
| 18 | 4.8 | 5.1 | absent | 0.3 | 5.0 | 5.2 | present | 0.2 | 4.5 | 4.9 | absent | 0.4 | B | Comparative Example |
| 19 | 3.5 | 4.8 | absent | 1.3 | 3.7 | 5.0 | absent | 1.3 | 3.1 | 4.6 | absent | 1.5 | A | Invention Example |
| 20 | 3.9 | 4.9 | absent | 1.0 | 4.1 | 5.0 | absent | 0.9 | 3.6 | 4.8 | absent | 1.2 | A | Invention Example |
| 21 | 4.2 | 4.8 | absent | 0.6 | 4.4 | 5.0 | absent | 0.6 | 3.9 | 4.6 | absent | 0.7 | A | Invention Example |
| 22 | 4.2 | 4.9 | absent | 0.7 | 4.4 | 5.1 | absent | 0.7 | 3.9 | 4.7 | absent | 0.8 | A | Invention Example |
| 23 | 4.2 | 5.3 | absent | 1.1 | 4.4 | 5.6 | absent | 1.2 | 3.9 | 5.1 | absent | 1.2 | A | Invention Example |
| 24 | 4.2 | 5.4 | absent | 1.2 | 4.4 | 5.7 | absent | 1.3 | 3.9 | 5.2 | absent | 1.3 | A | Invention Example |

EP 4 302 916 A1

11

| Test No. | Without Disturbance | | | | With Sheet Gap | | | | With Already Welded Points | | | | Judgement | Note |
|---|---|---|---|---|---|---|---|---|---|---|---|---|---|---|
| | nugget diameter after first current applying step N1 (times √t) | nugget diameter after second current applying step N2 (times √t) | LME cracking | N2-N1 (times √t) | nugget diameter after first current applying step N1 (times √t) | nugget diameter after second current applying step N2 (times √t) | LME cracking | N2-N1 (times √t) | nugget diameter after first current applying step N1 (times √t) | nugget diameter after second current applying step N2 (times √t) | LME cracking | N2-N1 (times √t) | | |
| 25 | 4.1 | 5.2 | absent | 1.1 | 4.3 | 5.5 | absent | 1.2 | 3.7 | 5.0 | absent | 1.3 | A | Invention Example |

\*:"↓" indicates a nugget diameter of less than 4.5√t obtained after welding.

Referring to Table 2, suitable welding joints without cracking and with a target nugget diameter are obtained regardless of disturbance conditions in Invention Examples, whereas suitable welding joints were not obtained in Comparative Examples.

Reference Signs List

| 1 | Upper steel sheet |
| 2 | Lower steel sheet |
| 3 | Upper electrode |
| 4 | Lower electrode |
| 5 | Nugget |
| 6 | Weld |
| 7, 8 | Spacer |
| 9, 10 | Already welded point |

**Claims**

1. A resistance spot welding method comprising:

   applying a current to a sheet combination of two or more overlapping steel sheets including at least one zinc-coated steel sheet with the sheet combination held and pressed by a pair of welding electrodes to join the steel sheets together,
   wherein the current application includes a first current applying step and a second current applying step,
   the first current applying step involves forming a nugget having a nugget diameter of 3Vt or more and 4.5Vt or less by setting a current value I1 (kA) and a weld time, where t is a thickness of the thinnest steel sheet among the overlapping steel sheets, and
   the second current applying step involves growing the nugget by repeating a cooling step for maintaining a zero-current state for 10 ms or more and less than 160 ms and a current applying step for applying a current for 20 ms or more and less than 200 ms at a current value I2 (kA) greater than or equal to the current value I1 (kA).

2. The resistance spot welding method according to Claim 1, wherein the number of repetitions of the cooling step and the current applying step in the second current applying step is 2 or more and 10 or less.

3. The resistance spot welding method according to Claim 1 or 2, wherein an amount of increase in nugget diameter in the second current applying step represented by (N2 - N1) is 0.1√t or more,
   where N1 represents a nugget diameter (mm) formed after completion of the first current applying step, and N2 represents a nugget diameter (mm) formed after completion of the first current applying step and the second current applying step.

4. The resistance spot welding method according to any one of Claims 1 to 3, wherein the zinc-coated steel sheet is a high strength steel sheet having a Ceq, which is represented by formula (1), of 0.20% or more and a tensile strength of 780 MPa or more,

$$\mathrm{Ceq}\ (\%)\ =\ C\ +\ Si/30\ +\ Mn/20\ +\ 2P\ +\ 4S\quad(1)$$

in formula (1), each element symbol represents an amount (mass%) of the corresponding element.

# FIG. 1

# FIG. 2

FIG. 3

FIG. 4

# FIG. 5

## INTERNATIONAL SEARCH REPORT

International application No.

**PCT/JP2022/009682**

| A. | CLASSIFICATION OF SUBJECT MATTER |
|---|---|

*B23K 11/11*(2006.01)i; *B23K 11/24*(2006.01)i
FI:    B23K11/11 540; B23K11/24 315

According to International Patent Classification (IPC) or to both national classification and IPC

| B. | FIELDS SEARCHED |
|---|---|

Minimum documentation searched (classification system followed by classification symbols)

B23K11/11; B23K11/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2010-247215 A (SUMITOMO METAL IND LTD) 04 November 2010 (2010-11-04) paragraphs [0014]-[0081], fig. 1-9 | 1-3 |
| Y | | 4 |
| Y | JP 2019-72764 A (JFE STEEL CORP) 16 May 2019 (2019-05-16) claim 3 | 4 |
| A | JP 2010-207909 A (SUMITOMO METAL IND LTD) 24 September 2010 (2010-09-24) paragraphs [0010]-[0081], fig. 1-10 | 1-4 |
| A | WO 2019/124464 A1 (NIPPON STEEL CORP) 27 June 2019 (2019-06-27) claims 1-4, fig. 1-6 | 1-4 |
| A | WO 2020/045678 A1 (TOYOTA TEKKO KK) 05 March 2020 (2020-03-05) paragraphs [0014]-[0021], fig. 1-5 | 1-4 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

**INTERNATIONAL SEARCH REPORT**
Information on patent family members

International application No.

**PCT/JP2022/009682**

| Patent document cited in search report | | | Publication date (day/month/year) | Patent family member(s) | Publication date (day/month/year) |
|---|---|---|---|---|---|
| JP | 2010-247215 | A | 04 November 2010 | (Family: none) | |
| JP | 2019-72764 | A | 16 May 2019 | (Family: none) | |
| JP | 2010-207909 | A | 24 September 2010 | (Family: none) | |
| WO | 2019/124464 | A1 | 27 June 2019 | (Family: none) | |
| WO | 2020/045678 | A1 | 05 March 2020 | (Family: none) | |

Form PCT/ISA/210 (patent family annex) (January 2015)

**EP 4 302 916 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003103377 A
- JP 2003236676 A
- JP 2017047476 A